# EUROPEAN PATENT SPECIFICATION

(11) **EP 2 213 862 B1**
(45) Date of publication and mention of the grant of the patent: **21.01.2015**
(21) Application number: 09178111.2
(22) Date of filing: 04.12.2009
(51) Int. Cl.: F02C 3/30, F02C 7/143

(54) **Device and method for controlling emissions of an electric power plant**
Vorrichtung und Verfahren zur Emissionsregelung von elektrischen Kraftwerken
Dispositif et procédé pour le contrôle d'émissions des centrales électriques

(30) Priority: 05.12.2008 IT MI20082161
(43) Date of publication of application: 04.08.2010
(73) Proprietor: Ansaldo Energia S.p.A., Genova (IT)
(72) Inventor: Piccardo, Fabio, 16149 Genova (IT)
(74) Representative: Bergadano, Mirko

(56) References cited:
- EP-A- 0 887 530
- WO-A-03/001046
- WO-A-2004/072453
- WO-A-2006/008221
- DE-A1- 19 619 836
- US-A1- 2004 255 596

## Description

The present invention relates to a method and to a device for controlling emissions of an electric power plant. In particular, the present invention regards a method and a device for controlling emissions of an electric power plant of the gas-turbine type.

A known type of gas-turbine plant for the production of energy comprises a compressor, a combustion chamber, a gas turbine, and a device for injecting water into the inlet of the compressor. Said injection device humidifies the air at inlet to the compressor in order to lower the temperatures in the combustion chamber and, consequently, reduce the polluting emissions, which are mainly due to the presence of nitrogen oxides (NOₓ) and carbon oxides (CO).

A device for controlling emissions of an electric power plant is described in the U.S. patent No. US 6,634,165. Said patent describes a control device, which calculates a flow rate of water to be injected into the inlet of the compressor on the basis of the measurements of humidity and of dew-point temperature of the ambient air at the compressor inlet.

Another device is disclosed in US-A-2004/0255596.

Consequently, said control device carries out a check on the emissions through an evaluation of the parameters upstream of the combustion chamber. However, this type of control is not particularly effective, and brings about an uncontrolled reduction of the levels of polluting emissions.

The aim of the present invention is to provide a method and a device for controlling emissions that will be free from the drawbacks of the known art highlighted above. In particular, an aim of the invention is to provide a method and a device for controlling emissions that will be able to improve the reduction of the levels of polluting emissions as compared to the solutions of the known art.

In accordance with said purposes, the present invention relates to a method and to a device for controlling emissions of a plant for the production of energy as claimed in Claim 1 and Claim 9, respectively.

Further characteristics and advantages of the present invention will emerge clearly from the ensuing description of a non-limiting example of embodiment thereof, with reference to the figures of the annexed drawings, wherein:
- Figure 1 is a block diagram of a plant for the production of energy comprising a device for controlling emissions according to the present invention;
- Figure 2 is a block diagram of the device for controlling emissions of Figure 1; and
- Figure 3 is a block diagram of a detail of the device for controlling emissions of Figure 2.

The plant 1 basically comprises a turbo assembly 3, a generator 4, which converts the mechanical power supplied by the turbo assembly 3 into active electrical power, an injection device 5 for injecting an enrichment fluid, a device 6 for controlling emissions, and a detection module 7.

The turbo assembly 3 comprises a compressor 9, a combustion chamber 10, and a gas turbine 11.

In particular, the compressor 9 is provided with an air-inlet pipe 13, which comprises a filter 14, an enrichment chamber 16, and a variable-geometry inlet stage 17. The inlet stage 17 comprises an array of adjustable vanes (not illustrated for reasons of simplicity in the attached figures), commonly referred to as IGVs (Inlet Guide Vanes), the inclination of which can be modified to regulate a flow rate of air drawn in by the compressor 9 itself.

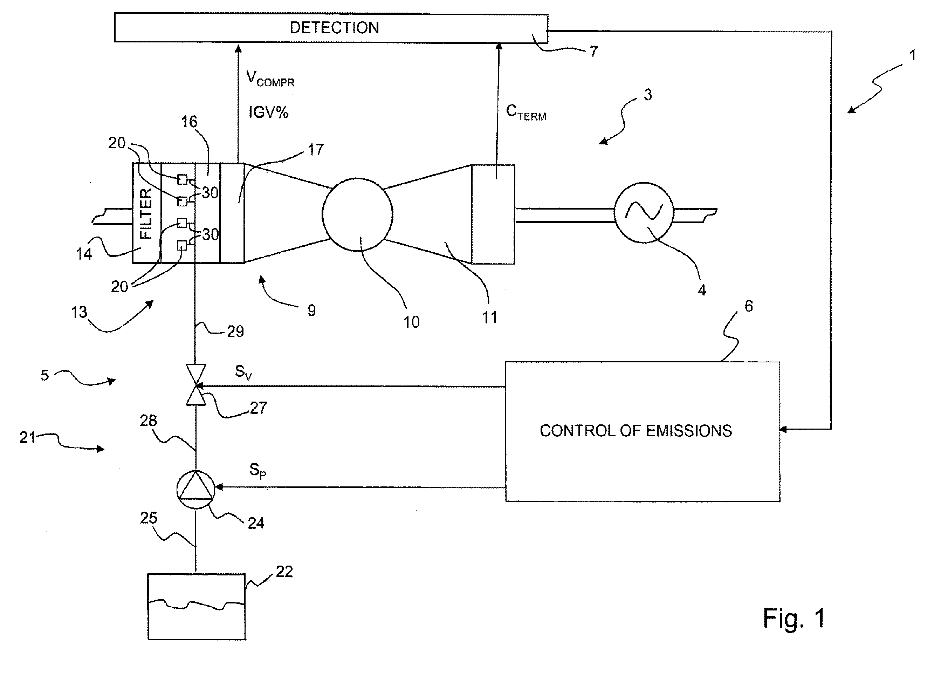

The injection device 5 comprises a plurality of nebulizer nozzles 20, represented schematically in Figure 1, and a feed assembly 21 for feeding the enrichment fluid to the nebulizer nozzles 20.

The nebulizer nozzles 20 are preferably arranged substantially at equal distances apart from one another along an internal surface of the enrichment chamber 16 and face an internal central area of the enrichment chamber 16 so that the nebulized enrichment fluid impinges uniformly upon the flow of air coming from the filter 14.

The feed assembly 21 comprises a tank 22, containing an enrichment fluid, a pump 24 connected to the tank 22 via a first feed pipe 25, a motor-driven regulating valve 27, connected to the pump 24 via a second feed pipe 28, a main distribution pipe 29, and a plurality of secondary distribution pipes 30, each of which is connected to a respective nebulizer nozzle 20.

The enrichment fluid is a fluid having a known specific thermal capacity C_{TS}. Here and in what follows, by "specific thermal capacity" C_{TS} of a fluid is meant the ratio between the heat supplied to the fluid and the corresponding increase in temperature of the fluid per unit mass.

In particular, the enrichment fluid is a fluid having specific thermal capacity C_{TS} higher than the specific thermal capacity of air, which, in standard conditions, is equal to 1000 J/kg°K. The use of an enrichment fluid having specific thermal capacity C_{TS} higher than the specific thermal capacity of air enables a significant increase in the specific thermal capacity of the operating fluid in the combustion chamber, improving the reduction of the polluting oxide emissions.

In the non-limiting example described and illustrated herein, the enrichment fluid used is ammonia, having a specific thermal capacity C_{TS} of approximately 5000 J/kg°K.

It remains understood that other fluids can be used, such as for example water (C_{TS} = 2000 J/kg°K) or helium (C_{TS} = 5200 J/kg°K). Mixtures of said fluids or mixtures with liquids in suspension, such as glycerine (C_{TS} = 2430 J/kg°K), may likewise be used.

The detection module 7 comprises a plurality of sensors (not illustrated for reasons of simplicity in the attached figures) that detect a plurality of parameters regarding the plant 1 to be supplied to the control device 6; in particular, the detection module 7 detects the following parameters:
- speed of rotation V_{COMPR} of the compressor 9;
- degree of opening of the adjustable vanes IGV%;
- thermal capacity C_{TERM} at the outlet of the gas turbine 11; here and in what follows, by "thermal capacity" of a fluid is meant the ratio between the heat supplied to the fluid and the corresponding increase in temperature of the fluid.

One variant (not illustrated) envisages that the detection module detects also the temperature and pressure of the ambient air, and the temperature and pressure of the air downstream of the injecting point of the enrichment fluid into the enrichment chamber 16 of the compressor 9.

In particular, the detection module 7 comprises a calorimeter (not illustrated for reasons of simplicity in the attached figures) for detection of the thermal capacity C_{TERM} at the outlet of the gas turbine 11. It remains understood that any other sensor or system that is able to detect or calculate the thermal capacity of a gas may be used for detection of the thermal capacity of the gas at the outlet of the gas turbine 11.

The calorimeter used in the non-limiting example described herein for the detection of the thermal capacity C_{TERM} of the gas at the outlet of the gas turbine 11 is a Regnault calorimeter.

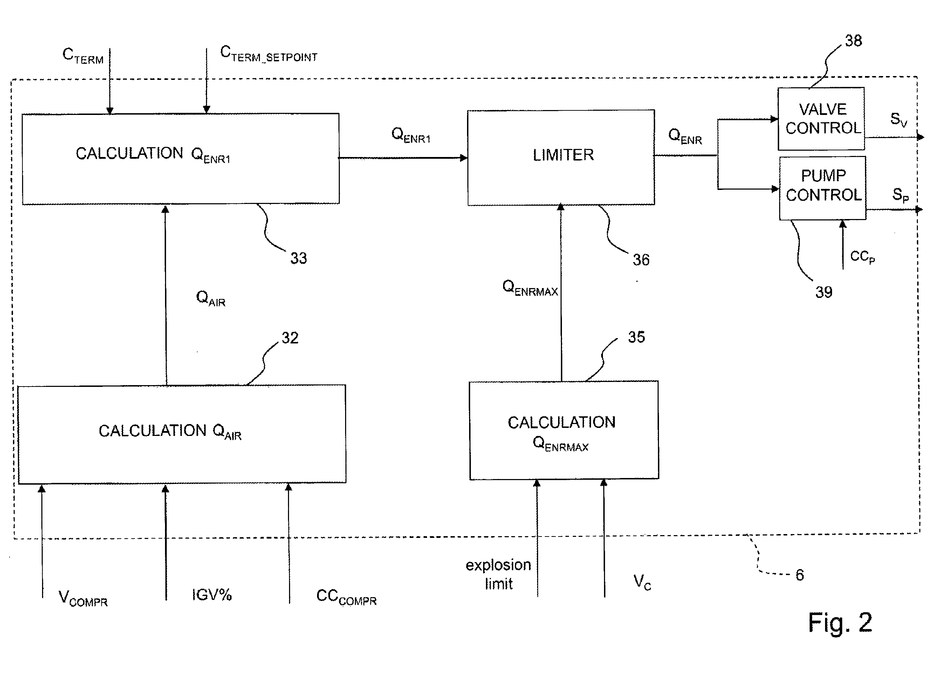

With reference to Figure 2, the device 6 for controlling emissions comprises a first calculation module 32, supplying the flow rate of inlet air Q_{AIR}, a second calculation module 33, supplying the flow rate of enrichment fluid Q_{ENR1}, a third calculation module 35, supplying the maximum admissible flow rate of enrichment fluid Q_{ENRMAX}, a limiter module 36, a valve-control module 38, and a pump-control module 39. The second calculation module 33, the third calculation module 35, and the limiter module 36 define the processing means for determining the flow rate of enrichment fluid Q_{ENR} to be added to the flow rate of inlet air Q_{AIR} for reducing the polluting emissions, chiefly of NOₓ.

The first calculation module 32 is configured for calculating the flow rate of comburent air Q_{AIR}, i.e., the air flowrate at inlet to the compressor 9. In particular, the first calculation module 32 calculates the flow rate of inlet air Q_{AIR} on the basis of the degree of opening of the adjustable vanes (IGV%) of the inlet stage 17, on the basis of the speed of rotation V_{COMPR} of the compressor 9, and on the basis of the characteristic curve CC_{COMPR} of the compressor 9.

The third calculation module 35 is configured for calculating the maximum admissible flow rate of enrichment fluid Q_{ENRMAX}.

In the non-limiting example described and illustrated herein, the third calculation module 35 is configured for calculating the maximum admissible flow rate of ammonia Q_{ENRMAX} on the basis of the limit of explosion of ammonia, which is equal to approximately 15 vol%, and on the basis of the volume V_{C} of the enrichment chamber 16. The maximum admissible flow rate of ammonia Q_{ENRMAX} is calculated, in fact, on the basis of the maximum volume of ammonia that can be injected into the enrichment chamber 16, which is equal to 15% of the volume V_{C} of the enrichment chamber 16.

A variant not illustrated of the present invention envisages that, in the case of use of an enrichment fluid of a different type, for example water, the third calculation module 35 will calculate the maximum admissible flow rate of enrichment fluid Q_{ENRMAX} on the basis of the curve of saturation of the ambient air and on the basis of the values of temperature and pressure of the air downstream of the point of injection of the enrichment fluid into the enrichment chamber 16 of the compressor 9. The enrichment fluid must not, in fact, bring about saturation of the inlet air in so far as saturation brings about formation of drops of condensate in the air at inlet to the compressor 9, which impact upon the vanes of the compressor 9 at a very high speed, thus eroding them.

The second calculation module 33 is configured for calculating the flow rate of enrichment fluid Q_{ENR1} on the basis of the flow rate of inlet air Q_{AIR}, and on the basis of the difference E_{CTERM} between the thermal capacity C_{TERM} at the outlet of the gas turbine 11 and a reference value of thermal capacity C_{TERM_SETPOINT}.

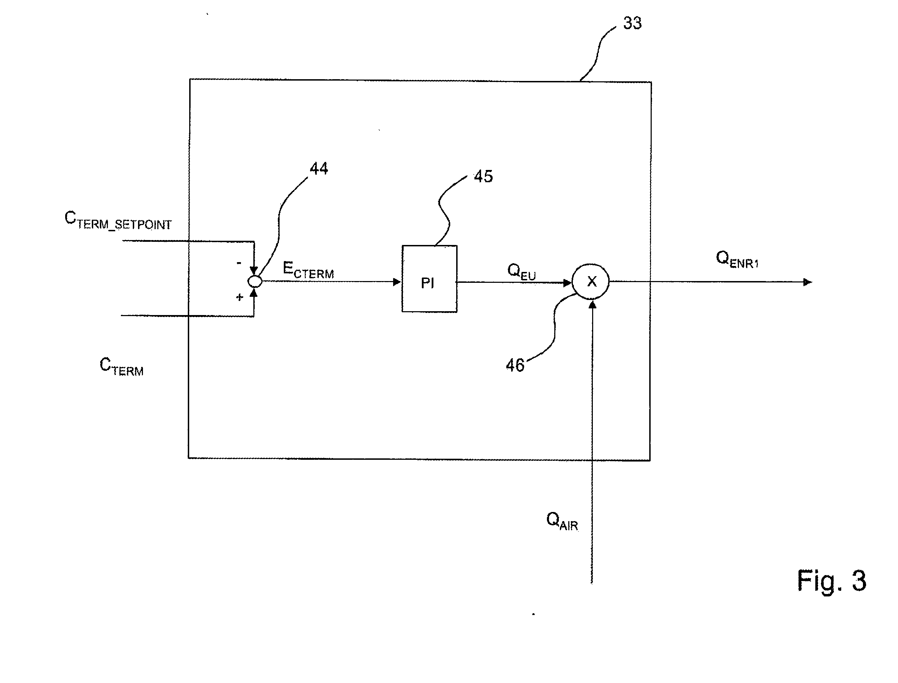

With reference to Figure 3, the second calculation module 33 comprises a subtractor node 44 and a PI (Proportional Integral) controller 45.

The subtractor node 44 determines the difference E_{CTERM} between the thermal capacity C_{TERM} at the outlet of the gas turbine 11 and a reference value of thermal capacity C_{TEPM_SETPOINT}. The difference E_{CTERM} is fed to the PI controller 45, which calculates a unit flow rate of enrichment fluid Q_{EU}, i.e., the flow rate of enrichment fluid necessary per unit flow rate of inlet air Q_{AIR}. By means of a multiplier node 46, the unit flow rate of enrichment fluid Q_{EU} is multiplied by the flow rate of inlet air Q_{AIR} entering the compressor 9, to obtain the flow rate of enrichment fluid Q_{ENR1}.

A variant (not illustrated) envisages that the second calculation module 33 comprises a PID (Proportional Integral Derivative) controller instead of the PI controller 45.

With reference to Figure 2, the limiter module 36 is configured for limiting the value of the flow rate of enrichment fluid Q_{ENR}, below the maximum admissible flow rate of enrichment fluid Q_{ENRMAX}, and supplies at ouput a limited flow rate of enrichment fluid Q_{ENR}.

The valve-control module 38 supplies to the regulating valve 27 a command signal S_{V} calculated on the basis of the limited flow rate of enrichment fluid Q_{ENR}, whilst the pump-control module 39 is configured for supplying to the pump 24 a command signal S_{P} determined on the basis of the limited flow rate of enrichment fluid Q_{ENR} and on the basis of a characteristic curve CC_{P} of the pump 24 used.

Advantageously, the device 6 for controlling emissions just described is able to determine in a simple and effective way the flow rate of enrichment fluid Q_{ENR} to be added to the flow rate of inlet air Q_{AIR} on the basis of detections made on the products of combustion. Said methodology enables an accurate monitoring of the efficiency of the combustion and a fast and stable response to the variations of the quality of the combustion.

Finally, it is clear that modifications and variations may be made to the device and method described herein, without thereby departing from the scope of the annexed claims.

## Claims

1. Method for controlling emission of an electric power plant (1) provided with a gas turbine (11) and a compressor (9) comprising the steps of:
- determining an inlet air flow rate (Q_{AIR}) at the inlet of the compressor (9);
- determining an enrichment fluid flow rate (Q_{ENR}) to be added to the inlet air flow rate (Q_{AIR}) to reduce polluting emission; and
- adding the enrichment fluid flow rate (Q_{ENR}) calculated to the inlet air flow rate (Q_{AIR}) ;
the method being **characterized in that** the step of determining the enrichment fluid flow rate (Q_{ENR}) comprises:
- detecting a parameter indicative of a thermal capacity (C_{TERM}) of the gas at the outlet of the gas turbine (11);
- calculating the enrichment fluid flow rate (Q_{ENR}), on the basis of the inlet air flow rate (Q_{AIR}) and of a difference (E_{CTERM}) between the detected parameter indicative of a thermal capacity (C_{TEFM}) and a reference value (C_{TERM_SETPOINT}).

2. Method according to Claim 1, wherein the plant (1) comprises a compressor (9), having an inlet stage (17) provided with a plurality of adjustable vanes, and wherein the step of determining the inlet air flow rate (Q_{AIR}) comprises the steps of:
- detecting a rotation speed (V_{COMPR}) of the compressor (9);
- detecting an opening degree (IGV%) of the adjustable vanes;
- selecting a characteristic curve (CC_{COMPR}) of the compressor (9);
- determining the inlet air flow rate (Q_{AIR}) on the basis of the rotation speed (V_{COMPR}), of the opening degree (IGV%) of the adjustable vanes and of the characteristic curve (CC_{COMPR}) of the compressor (9).

3. Method according to anyone of the foregoing Claims, wherein the step of determining the.enrichment fluid flow rate (Q_{ENR}) to be added comprises:
- calculating a maximum admissible flow rate (Q_{ENRMAX}) of the enrichment fluid;
- limiting the enrichment fluid flow rate (Q_{ENR}) to the maximum admissible flow rate (Q_{ENRMAX}) of the enrichment fluid.

4. Method according to Claim 3, comprising the step of calculating the maximum admissible flow rate (Q_{ENRMAX}) of the enrichment fluid on the basis of an explosion limit of the enrichment fluid.

5. Method according to Claim 3, comprising the step of calculating the maximum admissible flow rate (Q_{ENRMAX}) of the enrichment fluid on the basis of an ambient air saturation curve and on the basis of air temperature and pressure measures detected downstream of an injecting point, in which the enrichment fluid flow rate (Q_{ENR}) is added to the inlet air flow rate (Q_{AIR}).

6. Method according to anyone of the foregoing Claims, wherein the step of calculating the enrichment fluid flow rate (Q_{ENR}) to be added to the inlet air flow rate (Q_{AIR}) to reduce the polluting emission comprises making a proportional integral and derivative control based on the difference (E_{CTERM}) between the detected parameter indicative of the thermal capacity (C_{TERM}) and the reference value (C_{TERM_SETPOINT}).

7. Method according to anyone of the Claims from 1 to 5, wherein the step of calculating the enrichment fluid flow rate (Q_{ENR}) to be added to the inlet air flow rate (Q_{AIR}) to reduce the polluting emission comprises making a proportional integral control based on the difference (E_{CTERM}) between the detected parameter indicative of the thermal capacity (C_{TERM}) and the reference value (C_{TERM_SETPOINT}).

8. Method according to anyone of the foregoing Claims, wherein the enrichment fluid has a specific thermal capacity (C_{TS}) greater than the air specific thermal capacity.

9. Device for controlling emission of an electric power plant (1) provided with a gas turbine (11) and a compressor (9) comprising:
first calculating means (32) for determining an inlet air flow rate (Q_{AIR}) at the inlet of the compressor (9) ;
processing means (33, 35, 36) for determining the enrichment fluid flow rate (Q_{ENR}) to be added to the inlet air flow rate (Q_{AIR}) to reduce the polluting emission;
the device being **characterized by** detecting means (7) for detecting a parameter indicative of the thermal capacity (C_{TERM}) of the gas at the outlet of a gas turbine (11); and in that the processing means (33, 35, 36) comprise second calculating means (33) for calculating the enrichment fluid flow rate (Q_{ENR}), on the basis of the inlet air flow rate (Q_{AIR}) and of a difference (E_{CTERM}) between the detected parameter indicative of the thermal capacity (C_{TERM}) and a reference value (C_{TERM_SETPOINT}).

## Patentansprüche

1. Verfahren zur Emissionsregeiung eines elektrischen Kraftwerks (1), das eine Gasturbine (11) und einen Verdichter (9) aufweist, umfassend folgende Schritte:
- Bestimmen einer Einiassiuft-Strömungsrate (Q_{AIR}) am Einlass des Verdichters (9);
- Bestimmen einer Strömungsrate (Q_{ENR}) eines Anreicherungsfluides, die zu der Einlassluft-Strömungsrate (Q_{AIR}) zugefügt werden soll, um eine Schadstoffemission zu verringern; und
- Zufügen der berechneten Strömungsrate (Q_{ENR}) des Anreicherungsfluides zu der Einlassluft-Strömungsrate (Q_{AIR}),
wobei das Verfahren **dadurch gekennzeichnet ist, dass** der Schritt zum Bestimmen der Strömungsrate (Q_{ENR}) des Anreicherungsfluides folgendes umfasst:
- Detektieren eines Parameters, der ein Indikator für eine Wärmekapazität (C_{TERM}) des Gases am Auslass der Gasturbine (11) ist;
- Berechnen der Strömungsrate (Q_{ENR}) des Anreicherungsfluides, basierend auf der Einlassfuft- Strömungsrate (Q_{AIR}) und einer Differenz (E_{CTERM}) zwischen dem detektierten Parameter, der ein Indikator für eine Wärmekapazität (C_{TERM}) ist, und einem Referenzwert (C_{TERM_SETPOINT}).

2. Verfahren nach Anspruch 1, worin das Kraftwerk (1) einen Verdichter (9) mit einer Einlassstufe (17) aufweist, die mit einer Mehrzahl von verstellbaren Turbinenschaufeln ausgestattet ist, und worin der Schritt zum Bestimmen der Einlassluft- Strömungsrate (Q_{AIR}) folgende Schritte umfasst:
- Detektieren einer Drehgeschwindigkeit (V_{COMPR}) des Verdichters (9),
- Detektieren eines Öffnungsgrades (IGV%) der verstellbaren Turbinenschaufeln,
- Auswählen einer Kennlinie (CC_{COMPR}) des Kompressors,
- Bestimmen der Einlassluft- Strömungsrate (Q_{AIR}), basierend auf der Drehgeschwindigkeit (V_{COMPR}), des Öffnungsgrades (IGV%) der verstellbaren Turbinenschaufeln und der Kennlinie (CC_{COMPR}) des Verdichters.

3. Verfahren nach einem der vorhergehenden Ansprüche, worin der Schritt zum Bestimmen der hinzuzufügenden Strömungsrate des Anreicherungsfluides (Q_{ENR}) folgendes umfasst:
- Berechnen einer maximal zulässigen Strömungsrate (Q_{ENRMAX}) des Anreicherungsfluides;
- Begrenzen der Strömungsrate des Anreicherungsfluides (Q_{ENR}) auf die maximal zulässige Strömungsrate (Q_{ENRMAX}) des Anreicherungsfluides.

4. Verfahren nach Anspruch 3, umfassend den Schritt des Berechnens der maximal zulässigen Strömungsrate (Q_{ENRMAX}) des Anreicherungsfluides, basierend auf einer Expiosionsgrenze des Anreicherungsfluides,

5. Verfahren nach Anspruch 3, umfassend den Schritt des Berechnens der maximal zulässigen Strömungsrate (Q_{ENRMAX}) des Anreicherungsfluides, basierend auf einer Umgebungsluft-Sattigungskurve und basierend auf Lufttemperatur und Druckmessungen, die an einem in Stömungsrichtung nach einem Einspritzpunict, in dem die Strömungsrate (Q_{ENR}) des Anreicherungsfluides zu der Einlassluft-Strömungsrate (Q_{AIR}) zugefügt wird, liegenden Punkt detektiert wurden.

6. Verfahren nach einem der vorhergehenden Ansprüche, worin der Schritt des Berechnens der Strömungsrate (Q_{ENR}) des Anreicherungsfluides, die zu der Einlassluft-Strömungsrate (Q_{AIR}) addiert werden soll, um die Schadstoffemission zu verringern, das Durchführen einer Proportional-Integral-Differenzial-(PID)-Regelung umfasst, basierend auf der Differenz (E_{CTERM}) zwischen dem detektierten Parameter, der ein Indikator für eine Wärmekapazität (C_{TERM}) ist, und einem Referenzwert (C_{TERM_SETPOINT}).

7. Verfahren nach einem der Ansprüche 1 bis 5, worin der Schritt des Berechnens der Strömungsrate (Q_{ENR}) des Anreicherungsfluides, die zu der Einlassluft-Strömungsrate (Q_{AIR}) zugefügt werden soll, um die Schadstoffemission zu verringern, das Durchführen einer Proportional-Integral- (PI)-Regelung umfasst, basierend auf der Differenz (E_{CTERM}) zwischen dem detektierten Parameter, der ein Indikator für eine Wärmekapazität (C_{TERM}) ist, und einem Referenzwert (C_{TERM_SETPOINT}).

8. Verfahren nach einem der vorhergehenden Ansprüche, worin das Anreicherungsfluid eine spezifische Wärmekapazität (C_{TS}) aufweist, die größer ist als die spezifische Wärmekapazität von Luft.

9. Vorrichtung zur Emissionsregelung eines elektrischen Kraftwerks (1), das eine Gasturbine (11) und einen Verdichter (9) aufweist, umfassend:
erste Berechnungsmittel (32) zum Bestimmen einer Einlassluft- Strömungsrate (Q_{AIR}) am Einlass des Verdichters (9);
Verarbeitungsmittel (33, 35, 36) zum Bestimmen der Strömungsrate (Q_{ENR}) eines Anreicherungsfluides, die zu der Einlassluft-Strömungsrate (Q_{AIR}) zugefügt werden soll, um eine Schadstoffernission zu verringern;
wobei die Vorrichtung **dadurch gekennzeichnet ist, dass** sie Detektierungsmittel (7) zum Detektieren eines Parameters, der ein Indikator für eine Wärmekapazität (C_{TERM}) des Gases am Auslass der Gasturbine (11) ist, aufweist und dass die Verarbeitungsmittel (33, 35, 36) zweite Berechnungsmittel (33) zum Berechnen der Strömungsrate (Q_{ENR}) des Anreicherungsfluides, basierend auf der Einlassluft- Strömungsrate (Q_{AIR}) und einer Differenz (E_{CTERM}) zwischen dem festgestellten Parameter, der ein Indikator für eine Wärmekapazität (C_{TERM}) ist, und einem Referenzwert (C_{TERM_SETPOINT}) aufweisen.

## Revendications

1. Procédé de régulation des émissions d'une centrale électrique (1) dotée d'une turbine à gaz (11) et d'un compresseur (9) comprenant les étapes de :
- détermination d'un débit d'air d'admission (Q_{AIR}) au niveau de l'admission du compresseur (9) ;
- détermination d'un débit de fluide d'enrichissement (Q_{ENR}) devant être additionné au débit d'air d'admission (Q_{AIR}) pour réduire les émissions polluantes ; et
- addition du débit de fluide d'enrichissement (Q_{ENR}) calculé au débit d'air d'admission (Q_{AIR}) ;
le procédé étant **caractérisé en ce que** l'étape de détermination du débit de fluide d'enrichissement (Q_{ENF}) comprend :
- la détection d'un paramètre indiquant une capacité thermique (C_{TERM}) du gaz au niveau du refoulement de la turbine à gaz (11) ;
- le calcul du débit de fluide d'enrichissement (Q_{ENR}), en se basant sur le débit d'air d'admission (Q_{AIR}) et sur une différence (E_{CTERM}) entre le paramètre détecté indiquant une capacité thermique (C_{TERM}) et une valeur de référence (C_{TERM_SETPOINT}).

2. Procédé selon la revendication 1, dans lequel la centrale (1) comprend un compresseur (9), ayant un étage d'admission (17) doté d'une pluralité d'aubes réglables, et dans lequel l'étape de détermination du débit d'air d'admission (Q_{AIR}) comprend les étapes de :
- détection d'une vitesse de rotation (V_{COMPR}) du compresseur (9) ;
- détection d'un degré d'ouverture (IGV%) des aubes réglables ;
- sélection d'une courbe caractéristique (CC_{COMPR}) du compresseur (9) ;
- détermination du débit d'air d'admission (Q_{AIR}) en se basant sur la vitesse de rotation (V_{COMPR}), le degré d'ouverture (IGV%) des aubes réglables et la courbe caractéristique (CC_{COMPR}) du compresseur (9).

3. Procédé selon l'une quelconque des revendications précédentes, dans lequel l'étape de détermination du débit de fluide d'enrichissement (Q_{ENR}) devant être additionné comprend :
- le calcul d'un débit admissible maximal (Q_{ENRMAX}) du fluide d'enrichissement ;
- la limitation du débit de fluide d'enrichissement (Q_{ENR}) au débit admissible maximal (Q_{ENRMAX}) du fluide d'enrichissement.

4. Procédé selon la revendication 3, comprenant l'étape de calcul du débit admissible maximal (Q_{ENRMAX}) du fluide d'enrichissement en se basant sur une limite d'explosion du fluide d'enrichissement.

5. Procédé selon la revendication 3, comprenant l'étape de calcul du débit admissible maximal (Q_{ENRMAX}) du fluide d'enrichissement en se basant sur une courbe de saturation d'air ambiant et en se basant sur les mesures de température et de pression de l'air détectées en aval d'un point d'injection, dans lequel le débit de fluide d'enrichissement (Q_{ENR}) est additionné au débit d'air d'admission (Q_{AIR}).

6. Procédé selon l'une quelconque des revendications précédentes, dans lequel l'étape de calcul du débit de fluide d'enrichissement (Q_{ENR}) devant être additionné au débit d'air d'admission (Q_{AIR}) pour réduire les émissions polluantes comprend la réalisation d'une régulation proportionnelle intégrale et dérivée basée sur la différence (E_{CTERM}) entre le paramètre détecté indiquant la capacité thermique (C_{TERM}) et la valeur de référence (C_{TERM_SETPOINT}).

7. Procédé selon l'une quelconque des revendications 1 à 5, dans lequel l'étape de calcul du débit de fluide d'enrichissement (Q_{ENR}) devant être additionné au débit d'air d'admission (Q_{AIR}) pour réduire les émissions polluantes comprend la réalisation d'une régulation proportionnelle intégrale basée sur la différence (E_{CTERM}) entre le paramètre détecté indiquant la capacité thermique (C_{TERM}) et la valeur de référence (C_{TERM_SETPOINT}).

8. Procédé selon l'une quelconque des revendications précédentes, dans lequel le fluide d'enrichissement a une capacité thermique spécifique (C_{TS}) supérieure à la capacité thermique spécifique de l'air.

9. Dispositif de régulation des émissions d'une centrale électrique (1) dotée d'une turbine à gaz (11) et d'un compresseur (9), comprenant :
des premiers moyens de calcul (32) pour déterminer un débit d'air d'admission (Q_{AIR}) au niveau de l'admission du compresseur (9) ;
des moyens de traitement (33, 35, 36) pour déterminer le débit de fluide d'enrichissement (Q_{ENR}) devant être additionné au débit d'air d'admission (Q_{AIR}) pour réduire les émissions polluantes ;
le dispositif étant **caractérisé par** des moyens de détection (7) pour détecter un paramètre indiquant la capacité thermique (C_{TERM}) du gaz au niveau de la sortie d'une turbine à gaz (11) ; et en ce que les moyens de traitement (33, 35, 36) comprennent des seconds moyens de calcul (33) pour calculer le débit de fluide d'enrichissement (Q_{ENR}), en se basant sur le débit d'air d'admission (Q_{AIR}) et sur une différence (E_{CTERM}) entre le paramètre détecté indiquant la capacité thermique (C_{TERM}) et une valeur de référence (C_{TERM_SETPOINT}).
